Europäisches Patentamt

European Patent Office

Office européen des brevets

(11) Publication number: **0 094 064**
**A1**

# EUROPEAN PATENT APPLICATION

(21) Application number: 83104500.0

(22) Date of filing: **06.05.83**

(51) Int. Cl.³: **B 64 C 23/06**

(30) Priority: **11.05.82 US 376958**

(43) Date of publication of application: **16.11.83**
**Bulletin 83/46**

(84) Designated Contracting States: **DE FR GB IT NL SE**

(71) Applicant: **Rasmussen, George Stanmore,**
**941 Pebbleshire Road, Glendale, California 91207 (US)**

(72) Inventor: **Rasmussen, George Stanmore,**
**941 Pebbleshire Road, Glendale, California 91207 (US)**

(74) Representative: **Baillie, Iain Cameron et al, c/o Ladas &**
**Parry Isartorplatz 5, D-8000 München 2 (DE)**

(54) **Wing tip thrust augmentation system.**

(57) A system for augmenting the thrust of aircraft involving the presence of fixed wing tip aerodynamic surfaces (14, 15) which extend both above and below the wing reference plane and are canted inward. The surfaces develop thrust components from the energy otherwise lost in wing tip vortices while producing essentially no net additional outer wing lift, thereby minimizing any increase in wing design bending moments due to their presence. The surfaces may be swept aft or forward and are secured to the wings in the tip regions forward of the wing trailing edge.

## WING TIP THRUST AUGMENTATION SYSTEM

- - - - - - - -

## BACKGROUND OF THE INVENTION

In general, for subsonic transport category aircraft with cruise lift coefficients of about 0.5, approximately half of the total drag at cruise is induced (lift-dependent) drag. Most of this induced drag in cruise is caused by the formation of vortices at each wing tip. The term usually applied to this component of aircraft drag is vortex drag. Because of its high contribution to the total aircraft drag, vortex drag has increasingly been the subject of intensive research during the last eight years as the price of aircraft fuel has risen dramatically. Currently, fuel accounts for approximately thirty percent of the operating cost of the average commercial transport in regularly scheduled service. Therefore, since fuel usage is approximately proportional to drag, a drag reduction of even a few percent can constitute a very important saving in operating costs.

Vortex drag reduction may be achieved from (1) reducing the strength of the vortex by increasing aerodynamic efficiency through effectively increasing aspect ratio (e.g., wing tip extensions, end-plating, etc.) or (2) by developing lift with a forward acting, thrust component through the placement of an aerodynamic surface in the wing tip vortex flow field, for example the vortex diffuser disclosed in U.S. Patent 4,190,219 to J.E. Hackett.

For new aircraft wing design, most attention has been given to winglets and wing tip extensions to reduce vortex drag. A winglet, generally, refers to a single aerodynamic surface extending above and usually outboard from the tip chord which provides an effective increase in wing aspect ratio and a thrust component as well. A wing tip extension is usually accomplished by extending the trailing and leading edges at the same sweep angles until a desired aspect ratio is achieved. A comprehensive study by NASA was reported in NASA Technical Paper 1020, entitled THEORETICAL PARAMETRIC STUDY OF THE RELATIVE ADVANTAGES OF WINGLETS AND WING TIP EXTENSIONS (1977) by Harry H. Heyson, Gregory D. Riebe, and Cynthia Fulton. This study concluded that for the same design wing root bending moment, winglets provided a greater gain in induced efficiency (i.e., greater drag reduction at cruise). However, it should be noted that for the design of the Boeing 757 and 767 wings and the redesign of the DC-10 and Lockheed 1011 wings, increased wing spans have been utilized in preference to winglets.

The application of either winglets or wing tip extensions to an existing wing results in substantial increases in wing design bending moments. For this reason, the retrofitting of either winglets or wing tip extensions has not proven to be economically feasible for existing fleets of transport aircraft with the exception of the Lockheed Aircraft Company L-1011. By use of complex active controls, which relieve wing bending moment as a function of aircraft load factor, the L-1011 tip extension did not require a major structural redesign of the wing.

In this light, I directed my attention to other means of achieving vortex drag reduction, recognizing that neither winglets or wing tip extensions represented a viable solution for existing aircraft. The major objective of my investigation was to find a device for vortex drag reduction for which no significant wing structural redesign be required outside of the immediate area of the wing tip. End plates of various types, "feathers", which refers to multiple surfaces extending the wing span similar to a bird's wing, and "sails" did not achieve that objective.  "Sails" are multiple lifting surfaces extending outboard from the wing tip in configurations which are staggered chordwise and have different angles with respect to the wing reference plane including both dihedral and anhedral configurations.  Several spiral sails configurations, as proposed by J.J. Spillman in THE USE OF WING TIP SAILS TO REDUCE VORTEX DRAG, Aeronautical Journal, September 1978, were examined in detail.  Calculations by digital computer were made employing a very detailed lifting surface model of the McDonnell-Douglas DC-8-61, which revealed impressive induced drag reduction, in excess of 10 percent for cruise conditions, but with substantial increases in wing bending moments from tip to root which would require major wing structural redesign.

James Hackett, in U.S. Patent No. 4,190,219, proposed to intercept the fully formed wing tip vortex just aft of the wing trailing edge with a single vane mounted on a trailing boom attached to the wing at or near the tip.  The vane is generally rectangular, above the wing plane, and canted inboard at an angle on the order of 15 to 20 degrees relative to a chordwise plane perpendicular to the wing.  Although this configuration permits reduction of wing root bending moment, it does so at the expense of lifting efficiency while introducing a potentially severe problem with respect to wing flutter stability.  The inboard cant of the surface provides a downward acting component of the lift developed on the surface in level flight which must be overcome by increasing the lift on the basic wing (i.e., increasing angle of attack).  Due to its location aft of the trailing edge, the surface introduces essentially no "end-plating" effect on the basic wing.  Therefore, the Hackett device actually reduces the effective wing aspect ratio.  Further, the structural strength and stiffness requirements for the trailing boom imposed by maximum design loads and aeroelastic considerations will result in an extremely heavy boom. The boom will be subjected to extremely large torsion, bending and shear loads which it must transfer into the outer wing primary structure. It is doubtful that such a configuration could be incorporated on an existing aircraft without a major wing structural redesign to ensure freedom from wing flutter in the design flight regime. Therefore, this design, although in some ways aerodynamically attractive, has limitations in its applicability to existing aircraft similar to the vortex drag reduction technology previously examined.

To date, with the exception of the L-1011 with active controls, the art as applied to existing aircraft has not achieved significant vortex drag reduction without the need for major wing structural redesign. Thus, most aircraft flying today are economically barred from the use of state-of-the-art vortex drag reduction technology.

In summary, the prior art for drag reducing wing tip devices with the exception of the Hackett's vortex diffuser inherently included increases in the effective aspect ratio of the wing with consequent significant reduction in induced drag but with equally consequent significant increases in wing bending moments. The two go hand-in-hand. Therefore, since prior research failed to obtain significant drag reduction with essentially no change in the effective wing aspect ratio, a major need still existed.

## BRIEF STATEMENT OF THE INVENTION

Faced with the foregoing, I have achieved the ultimate objective of significantly reducing vortex drag without increasing wing bending moments

0094064

beyond the bending strength capability of the existing wing and additionally providing the capability of reducing the inner wing design bending moments. An end result of reducing inner wing bending moments may be increased design gross weight of the aircraft.

The basic objective, in technical terms, was to obtain a net thrust vector from all aerodynamic forces resulting from surfaces to be introduced in the three-dimensional wing tip vortex flow fields, while not materially changing the overall aerodynamic lifting forces on the outer wings.

Wing tip devices in the past have not employed inboard canting for the reasons reported in the NASA Technical Paper 1020, namely the adverse effects of interference drag. Hackett in his patent 4,190,219 employed inboard canting while mounting his device aft of the trailing edge of the wing. This placement precluded interference drag. I believed it possible to mount inboard canted and properly configured, aerodynamic surfaces forward of the trailing edge of the wing attached to a practical structure without any significant interference drag while achieving substantial vortex drag reduction.

My studies were directed to select an operational aircraft to which surfaces could be added and which would benefit significantly by the thrust augmentation provided by my invention. I selected the McDonnell-Douglas Model DC-8-61 with my invention added at each wing tip with inboard cant angles for each of it aerodynamic surfaces relative to a plane perpendicular to the wing reference plane and parallel to the aircraft longitudinal axis. In other words, the angle subtended by the wing reference plane and each added surface reference plane is acute (less than 90 degrees). Additionally, the total torque about a chordwise axis at the wing tip in the wing reference plane was limited. The limit so imposed was determined by the strength of the wing at the joint between the wing and the original wing tip. The most critical design loads resulting from the added surfaces could not exceed the strength capability of the wing at the wing tip joint.

One further design feature was selected, namely, two surfaces of the same planform, one above and one below the wing reference plane, be used. The basis for this requirement is important. Let us define the optimally designed surface as one which provides the maximum thrust component at cruise for a fixed value of torque about the aforesaid chordwise axis at the wing tip. Characteristically, wing tip drag reduction devices have operated above the wing reference plane. However, it is not possible to double the thrust component of a surface by doubling its area if limited to twice the fixed value of torque. An increase in chord results in an aspect ratio reduction and reduced lifting efficiency (lift per unit area). An increase in span, retaining the same average chord, places the added surface in an area of reduced local transverse velocity of the tip vortex, thus offsetting the increase in lifting efficiency due to increased aspect ratio. The transverse velocity component of the tip vortex, which is perpendicular to the free stream direction, reduces as the radial distance from the theoretical tip increases. The energy available in the wing tip vortex flow fields both above and below the wing reference plane, are of essentially equal strength. Therefore, the optimum design consists of two surfaces which, except for camber and twist, are virtual mirror images of each other. Secondary effects, however, may dictate a small difference in chordwise position. Ground clearance requirements may, also, place a practical limit on span for the lower surface.

As previously mentioned, the study leading to the invention was directed to the DC-8-61 aircraft with the restrictions previously specified. Results from preliminary configurations were encouraging and led to a final configuration which is expected to yield approximately a nine percent reduction in induced drag at cruise Mach numbers with acceptable increases in outer wing design bending moments and a slight reduction of inner wing design bending moments. The practical result was that the system embodied in the final configuration could be installed on the DC-8-61 aircraft by removing each wing tip (each tip is approximately two feet wide and eight feet long) and replacing it with the device and its attaching structure. Except for changes in the attachments at the wing tip joint, no further structural change was required for the wing. Preliminary analysis of structural design concepts indicates that the light weight of the device with its relatively small stiff aerodynamic surfaces will not adversely affect the flutter stability of the aircraft, a problem frequently encountered with winglets.

BRIEF DESCRIPTION OF THE DRAWINGS

This invention may be more clearly understood from the following detailed description and by reference to the drawings in which:

Figure 1 is a fragmentary perspective of the outboard end of the port outer wing panel of a swept wing jet transport aircraft with my invention incorporated therein;

Figure 2 is a horizontal plan view thereof looking from above;

Figure 3 is a side elevation view thereof looking inboard;

Figure 4 is a rear elevation view thereof looking forward;

Figure 5 is a perspective view of the entire aircraft showing the first embodiment of the invention incorporated on a DC-8-71 aircraft;

Figure 6 is a perspective view of the same aircraft with the fifth embodiment of the invention incorporated;

Figure 7 is a cross-sectional view of the upper surface as defined by Section A-A in Figure 4;

Figure 8 is a cross-sectional view of the lower surface as defined by Section B-B in Figure 4;

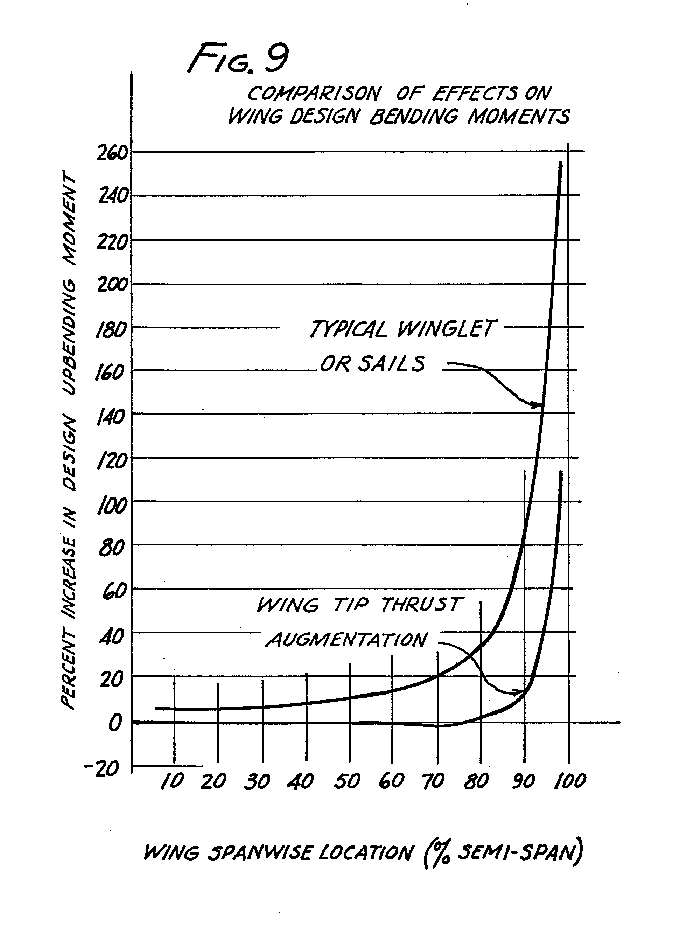

Figure 9 is a graphical presentation comparing the effect on wing design upbending moments of an unmodified aircraft, for typical winglet or sails configuration and my invention, with all yielding approximately the same drag reduction at cruise; and

Figure 10A is a perspective sketch of the port outer wing panel of the aircraft of Figures 1-5 showing aerodynamic loading resulting from incorporation of the first embodiment of my invention.

Figure 10B is a perspective sketch of the port outer wing panel of the aircraft of Figures 6 and 23-26 showing aerodynamic loading resulting from incorporation of the fifth embodiment of my invention.

Figure 10C is a free-body diagram of the port outer wing panel showing lift distribution, shear and bending moment for the aircraft of Figures 1-5.

Figure 11 is a fragmentary perspective of the outboard end of the port outer wing panel of a swept wing jet transport aircraft with a second embodiment of my invention integrated into the wing tip incorporated therein;

Figure 12 is a horizontal plan view thereof looking from above;

Figure 13 is a side elevation view thereof looking inboard;

Figure 14 is a rear elevation view thereof looking forward;

Figure 15 is a fragmentary perspective of the outboard end of the port outer wing panel of a swept wing jet transport aircraft with a third embodiment of my invention employing multiple depending surfaces incorporated therein;

Figure 16 is a horizontal plan view thereof looking from above;

Figure 17 is a side elevation view thereof looking inboard;

Figure 18 is a rear elevation view thereof looking forward;

Figure 19 is a fragmentary perspective of the outboard end of the port outer wing panel of a swept wing jet transport aircraft with a fourth embodiment of my invention having a forward swept surface incorporated therein;

Figure 20 is a horizontal plan view thereof looking from above;

Figure 21 is a side elevation view thereof looking inboard;

Figure 22 is a rear elevation view thereof looking forward.

Figure 23 is a fragmentary perspective of the outboard end of the port outer wing panel of a swept wing jet transport aircraft with a fifth embodiment of my invention placed forward of the wing incorporated therein;

Figure 24 is a horizontal plan view thereof looking from above;

Figure 25 is a side elevation view thereof looking inboard;

Figure 26 is a rear elevation view thereof looking forward.

## DETAILED DESCRIPTION OF THE INVENTION

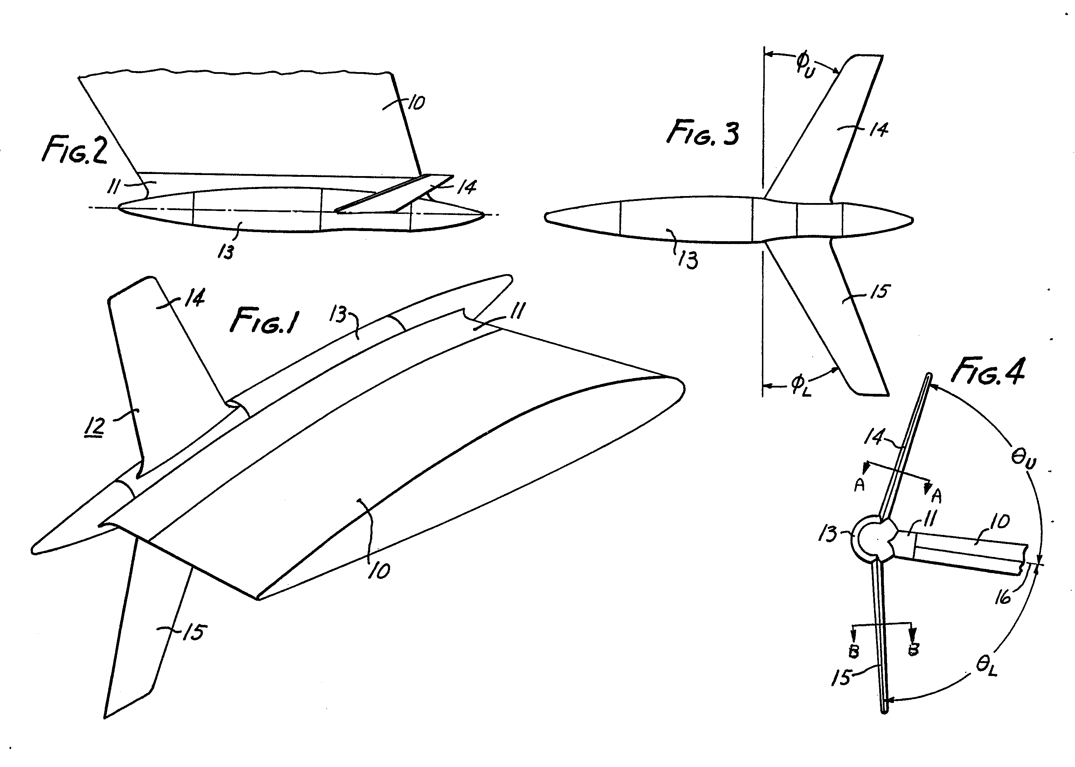

My invention is illustrated by its first embodiment in Figure 1 showing the outer end of the port wing of a swept wing jet transport aircraft. The outer wing 10 is aerodynamically unchanged and swept and tapered as shown in Figure 2. The conventional wing tip is removed and replaced by the thrust augmentation system 12 which consists of: (1) a transition section 11 lofted similarly to the outer wing 10 to which it connects; (2) an aerodynamically shaped body 13 providing support for upper and lower aerodynamic surfaces 14 and 15, respectively, and an efficient means of transferring aerodynamic loads from these surfaces into the outer wing through transition section 11.

Surfaces 14 and 15 are secured to body 13 in essentially the same chordwise location with their trailing edges as close as is structurally practical to the trailing edge of member 11. The surfaces 14 and 15 have essentially the same planform in mirror image about the wing as shown in Figure 3. Their true leading edge sweep angles $\phi_U$ and $\phi_L$, as shown in Figure 3, are approximately equal and their magnitude is based on the cruise Mach number range of the aircraft. The surfaces 14 and 15, as shown in Figures 1, 2, 3 and 4, have a taper ratio of .5, an aspect ratio of 3.3 a span (per surface) about 3.6 percent of wing span, and a planform area about .27 of wing planform area per surface.

The reference planes of surfaces 14 and 15 subtend approximately equal angles, $\theta_U$ and $\theta_L$, with the wing reference plane 16 as shown in Figure 4. The magnitude of these angles, as well as the surface planform parameters specified above, are dependent on the aerodynamic flow characteristics of the wing, especially in proximity to the tip, and design load limitations imposed by wing structural design criteria. There is, further, a limit imposed with respect to the amount of inboard cant (defined by the complements of $\theta_U$ and $\theta_L$ ) which can be achieved without significant drag resulting from interference effects of the surfaces 14 and 15 with the wing surfaces of members 10 and 11.

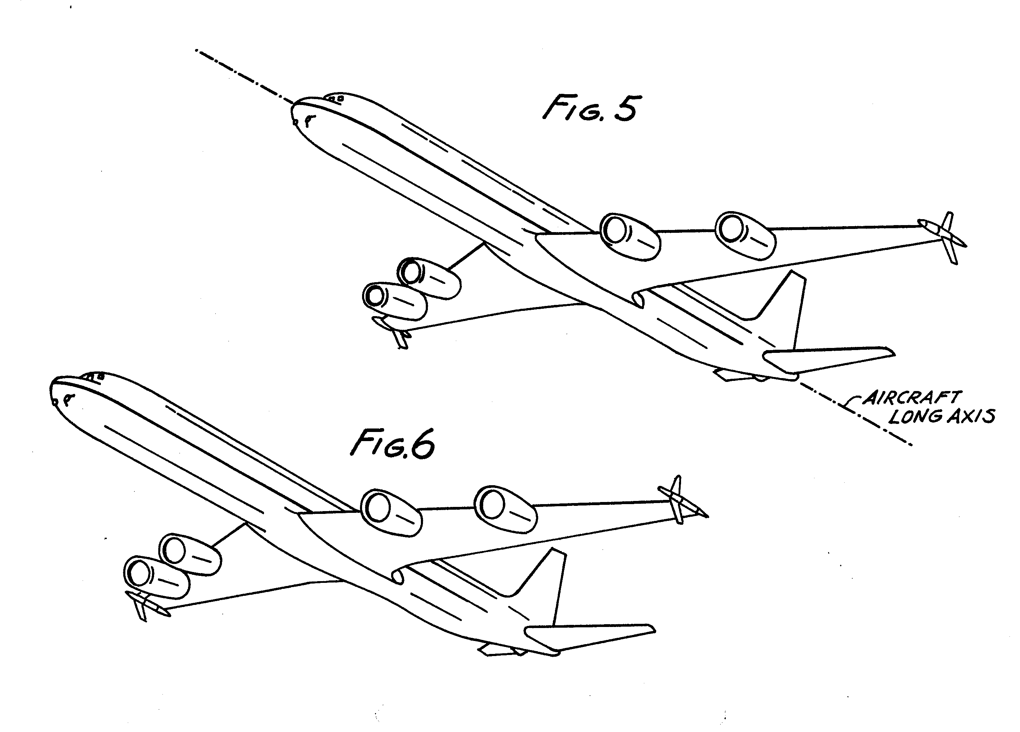

Figure 5 depicts a full perspective view of a DC-8-71 aircraft (a reengined DC-8-61) with the first embodiment of my invention incorporated. Winglet designs have avoided inboard cant angles due to possible adverse interference effects, as discussed in NASA Technical Paper 1020, and the effective reduction of wing aspect ratio which is caused by inboard canting. However, surfaces 14 and 15, which are considerably smaller in area relative to wing area than conventional winglet design, should exhibit no significant interference effects for subtended angles of eighty degrees and a cruise Mach number of .8. However, for subtended angles of seventy degrees at .8 Mach number it is expected that the interference effects would result in sufficient drag to significantly reduce the net , thrust produced by my invention. This drag, termed interference drag, increases with reduction in subtended angles $\theta_U$ and $\theta_L$ and the limiting angle must be determined from criteria established by engineering judgment, based on detailed analyses, for each aricraft being modified.

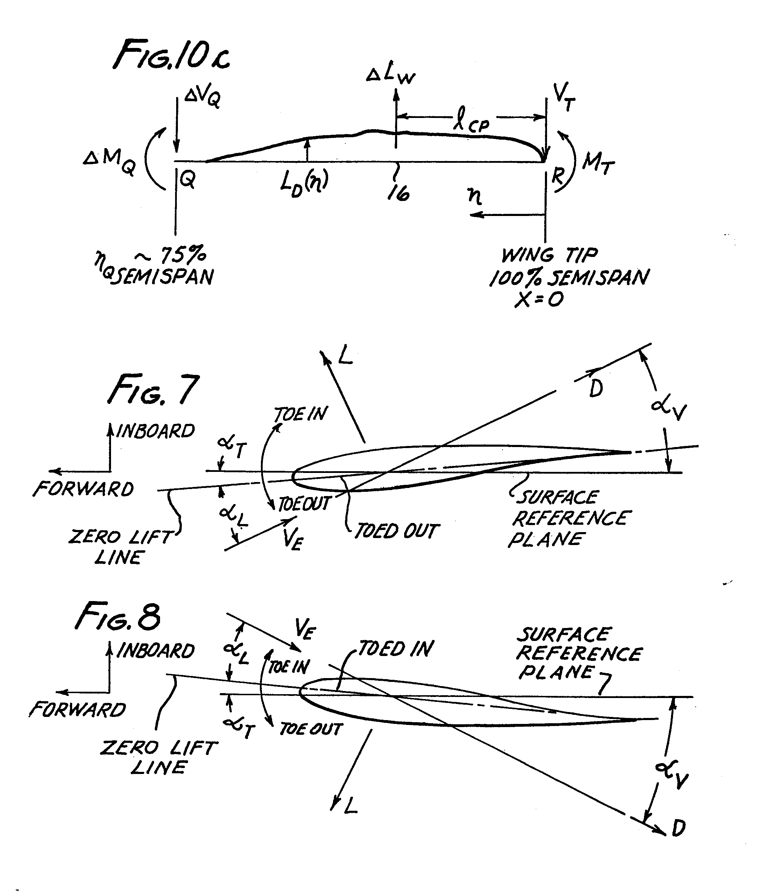

Views A-A and B-B, found in Figure 4, depict aerodynamic cross-sections of surfaces 14 and 15 with camber and twist as shown in Figure 7 for View A-A and Figure 8 for View B-B. The upper surface 14 is cambered convex inboard and the lower surface 15 is cambered convex outboard. We shall define the zero lift angle as $\alpha_T$, the angle between the zero lift line and the surface reference plane (which is parallel to the aircraft longitudinal axis), as shown in Figures 7 and 8. If the direction of the local effective velocity vector $V_E$ is parallel to the zero lift line, $\alpha_V$ equal $\alpha_T$; and the lift on the segment, L, which is proportional to $\alpha_L$, is zero since $\alpha_L$ is zero. For most transport aircraft, the root incidence angle of $\alpha_T$ for the upper surface will be toed-out, similar to the angle shown in the cross-section of Figure 7; and the lower surface root incidence angle of $\alpha_T$ will be toed-in, similar to the angle shown in the cross-section of Figure 8.

Additionally, the zero lift angle $\alpha_T$ may vary along the span of each surface, an aerodynamic feature known as twist. Twist may result from aerodynamic shape, elastic deflection of the surface, and geometric warping of the unloaded surface by lofting requirements imposed during fabrication. The reason for this twist is that the effective angles of attack of the flow over streamwise segments, $\alpha_V$, vary along the span. Thus, the surfaces 14 and 15 must be designed for twist and camber so that the variations in effective local flow angles, $\alpha_V$, at the design cruise condition are accounted for and that the twist and camber specified for each surface will produce maximum thrust. This thrust represents the summation of the net forward acting components of the lift forces acting on both surfaces.

As shown in Figures 7 and 8, the summation of aerodynamic forces over a streamwise segment will produce lift, L, and drag, D, forces perpendicular and parallel to the local effective free stream velocity of the flow. The drag force is sufficiently small to be ignored for purposes of this discussion. Also, as shown , the generalized flow characteristics of the wing tip vortex field are such that for positive (upward acting) lift on a wing, the flow at the tip above the wing will have a velocity component transverse to the aircraft plane of symmetry directed inboard; the flow at the tip below the wing will have a velocity component transverse to the aircraft plane of symmetry directed outboard.  The strength of these components diminishes with increasing distance from the wing surface and increases as one progresses ast, parallel to the wing reference plane, from leading edge to trailing edge.  Optimum chordwise placement of the theoretical roots of surfaces 14 and 15 is, therefore, as far aft of the maximum wing thickness as is feasible from the standpoint of structural design considerations in order to minimize interference drag at high Mach number and to place the surface in a flow field with high transverse flow velocities and, hence, $\alpha_V$ angles.

The effective angles of attack, $\alpha_L$, on the surfaces 14 and 15 for typical swept wing jet transport aircraft in cruise condition will probably be sufficiently high to require toe-out of $\alpha_T$ for the upper surfaces and toe-in of $\alpha_T$ for the lower surfaces throughout the span in order to preclude loss of lifting efficiency near stall of the surfaces .  Due to reduced transverse velocity, it may be necessary to reduce the toe-out and toe-in, respectively, of the upper and lower surface zero lift angles $\alpha_T$ in moving from root to tip of each surface in order to achieve maximum lift for each surface.

As may be seen in Figures 7 and 8, for positive lift on the wing, the lift on upper surface 14 is directed inboard and forward and the lift on lower surface 15 is directed outboard and forward.  The inboard cant angles will thus provide downward components transverse to wing reference plane 16 for the lift acting on both upper and lower surfaces as may be visualized in Figure 4.  The downward component of each surface is approximately

0094064

equal to the total lift on the surface times the
cosine of the subtended angle ( $\theta_U$ for surface 14,
$\theta_L$ for surface 15). Surfaces 14 and 15 are designed
such that the magnitudes of their lift vectors are
approximately equal. Thus, since $\theta_U$ and $\theta_L$ are
approximately equal, there will be virtually
no net force inboard or outboard in wing reference
plane 16. The lift vectors of both surfaces 14 and
15 will produce a clockwise moment looking forward about
a chordwise axis in wing reference plane 16 at the
tip, as may be visualized in Figure 4 where the axis
would be the point of intersection of the reference
planes of 14 and 15. The downward components of
the lift vectors of surfaces 14 and 15 will act at
an aft location on the tip chord. Therefore, a
transfer forward on the tip chord of the sum of
these components will result in a clockwise moment
looking inboard about an axis in the wing reference
plane perpendicular to the tip chord. For purposes
of illustration, Figure 10A presents, in a perspective
simplified view, the more significant forces and moments
acting at the wing tip and the lift forces along the
wing due to the presence of the invention on a wing
carrying positive lift. It should be noted that the
double arrowed vectors are moments with a right-hand
rule sign convention.

Figure 10 A depicts the port outer wing of
the DC-8-71 aircraft shown in Figure 5. The plane
abcd is the projection of the outer wing panel in
wing reference plane 16 of Figure 4;

ab is the projection of the leading edge;

dc is the projection of the trailing edge;

bc is the projection of the tip chord;

ad is the projection of a chord at an inboard
location;

LRA is a straight line passing through
points S and R at the 43 percent chord locations on ad and bc, respectively, and arbitrarily designated the Load Reference Axis (LRA);

x is parallel to the aircraft longitudinal axis and directed forward;

z is perpendicular to x and directed upward forming a plane xz parallel to the plane of symmetry of the aircraft and containing the point S;

y is perpendicular to the plane xz and directed to port forming an orthogonal coordinate system xyz;

ad and bc are parallel to x; and

x' y' z' is an orthogonal coordinate system parallel to xyz with origin at point R.

For clarity in showing force and moment vectors acting at point R, the system x' y' z' is shown in its actual location and, also, moved outboard along y' an arbitrary distance; thus, R is shown twice.

The significant forces and moments at point R resulting from aerodynamic loads on surfaces 14 and 15 are as follows:

T, which lies in the plane x' z', is the thrust directed along the line of flight and forming an angle with the x' axis equal to the angle of attack of the aircraft.

P, which lies in the plane y' z', is a downward force perpendicular to the wing reference plane abcd;

$M_x$ is a moment about the x' axis, shown positive for right-hand rule, tending to cause upbending of the wing;

$M_{y1}$ is a moment about the projection of the y' axis in plane abcd caused by the transfer of the force P from its aft location on bc forward along x' to point R.

The significant forces acting on the wing, as a result of the "end-plating" effect on surfaces 14 and 15, are shown for simplicity as the distribution

$L_D$ acting normal to plane abcd along the line QR on the LRA. Actually, these forces are incremental lift forces acting in a direction perpendicular to the line of flight and generally forward of the 43 percent chord location of the LRA. For purposes of illustrating outer wing bending loads, the lift components acting in the plane abcd, the drag forces and torque about the LRA are ignored.

To treat the wing as a simple beam element QR transversely loaded in the plane formed by z' and the LRA, it is necessary to: (1) resolve P and T into their components in said plane, which components shall be designated $V_{TP}$ and $V_{TT}$, respectively; and (2) resolve the moment vectors $M_{y1}$ and $M_x$ into their components transverse to said plane, which components shall be designated $M_{TY}$ and $M_{TX}$, respectively.

The outer wing can now be treated as a free body, for determination of bending and shear loads, as shown in Figure 10C. At point R, $V_T$ equals $V_{TP}$ plus $V_{TT}$ and $M_T$ equals $M_{TY}$ plus $M_{TX}$.

As mentioned earlier, the inboard canting of surfaces 14 and 15 provides the means of reducing wing bending moments. The explanation utilizing Figure 10C, a free-body diagram of the outer wing, follows. The outer wing is treated as a straight beam in wing reference plane 16 at the 43 percent chord location. The line thus formed is defined as the Loads Reference Axis (LRA). The loads applied to the beam are transverse distributed loads, shears and moments which cause bending in a plane containing the LRA and perpendicular to the wing reference plane. Torque about the LRA, axial load along the LRA and loads causing bending in the wing reference plane are not considered.

The symbols used in Figure 10C are defined below, with their mathematical derivations presented

where appropriate:

$\Delta L_W$ = Incremental lift on wing due to presence of wing tip device ("end-plating" effect);

$\ell_{CP}$ = Spanwise distance from wing tip to effective center of pressure of incremental lift on wing, $\Delta L_W$, along the loads reference axis (LRA);

$\eta$ = Longitudinal dimension along the LRA from tip, positive inboard;

$\eta_i$ = $\eta$ at any point i on the LRA;

$M_T$ = Upbending moment introduced at wing tip by device about axis in the wing reference plane (WRP) perpendicular to the LRA;

$V_T$ = Shear perpendicular to the WRP introduced at wing tip by device;

$L_D(\eta)$ = Distributed incremental lift per unit length along the LRA;

$\Delta M_i$ = Moment reaction at any point i on the LRA (+ for upbending);

$\Delta V_i$ = Shear reaction at any point i on the LRA (+ is downward);

$$\Delta L_W = \int_0^{\eta_Q} L_D(\eta)\,d\eta;$$

$$\ell_{CP} = (1/\Delta L_W)\int_0^{\eta_Q} \eta\, L_D(\eta)\,d\eta;$$

$$\Delta M_i = M_T - \eta_i V_T + \int_0^{\eta_i} \eta\, L_D(\eta)\,d\eta;$$

$$\Delta V_i = -V_T + \int_0^{\eta_i} L_D(\eta)\,d\eta;\ \text{and}$$

Q is the point on the LRA at $\eta = \eta_Q$ where $L_D(\eta) = 0$ for $\eta$ greater than $\eta_Q$.

Figure 10A shows for a symmetrical positive lift condition the two forces, P and T, at the port wing tip which best illustrate the importance of the invention. T is the thrust produced by the invention at the wing tip which augments the thrust of the engines. P is a downward force, offsetting the incremental lift, $L_D$, due to end-plating, which reduces the increase in wing bending moments caused by the concentrated wing tip moment and the end-plating effects of the invention up to point Q and provides the means to ensure that the wing design bending moments inboard of point Q are not exceeded.

To my knowledge no prior wing tip modification has maintained the net wing lift without change while providing the thrusting component T and the wing bending moment reducing force P.

Thus the practical results of the inboard canting for an optimum design at a critical upbending design condition are:

1.  The increased outer wing lift, $\Delta L_W$, due to the "end-plating" effect of surfaces 14 and 15 is equally offset by $V_T$ so that there is no change in wing design shear loads inboard of point Q as shown in Figure 10C, beyond which the "end-plating" effects on wing lift become insignificant (i.e. $\Delta V_Q = 0$). Also, a further result of this feature is that no significant change in longitudinal stability and lift characteristics occurs from the incorporation of the invention.

2.  The downbending moment due to $V_T$ increasingly offsets the upbending moment $M_T$, introduced at the wing tip, until the point Q, at approximately 75 percent semispan, is reached. As shown, $\ell_{CP}$ equals the distance from the wing tip to the resultant lift force, $\Delta L_W$, due to the "end-plating" effect of the surfaces on the outer wing panel. If $V_T$ times $\ell_{CP}$ equals $M_T$, the design moment from point Q to the wing root will be unchanged. If $V_T$ times $\ell_{CP}$ is greater than $M_T$, the design moment from point Q to the wing root will be decreased by the difference in moments at point Q and vice versa. However, since design bending moment increases rapidly in moving inboard on the wing, the percentage of change in bending moment decreases rapidly in moving inboard from point Q to the root.

The benefits outlined in 1 and 2 above are similarly realized for negative lift design conditions.

Although greatly simplified (e.g., inertial effects are not considered), the essential points with respect to the capability to alter wing bending design loads are made above. Additional features of importance are that stability and control of the aircraft and, therefore, handling qualities are essentially unchanged. In fact, the aircraft could be flown with the invention incorporated on one side only with virtually no effect on lift or rolling moment except that resulting from balancing the yawing moment due to thrust at one wing tip only.

The parameters specified previously for the first embodiment of the invention incorporated on the DC-8-71 aircraft are generalized below for application to other aircraft.

Aspect ratio limitations are determined at the low end by airfoil thickness, interference effects and boundary layer thickness and the relative lifting efficiency per unit area determined by the lift curve slope ($dC_L/d\alpha$ or $C_{L_\alpha}$). The value of $C_{L_\alpha}$, uncorrected for Mach number effects, is approximately determined by

$$C_{L_\alpha} = 2\pi\ (AR/AR+2))\ \text{in per radian units}$$

$$\text{Lift} = C_{L_\alpha}\ (\alpha-\alpha_{L=0})\ qS;$$

where     $\alpha$ is angle of attack;

$\alpha_{L=0}$ is angle of attack at zero lift;

q is dynamic pressure;

S is the reference surface area; and AR is aspect ratio.

Therefore, for AR approaching infinity, $C_{L_\alpha}=2\pi$;

for AR=2, $C_{L_\alpha}=\pi$;

for AR=1, $C_{L_\alpha}=2\pi/3$.

Assuming the average chord of a surface to be 30 percent of the wing tip chord for AR=1, approximately 20 percent of the span of the surface, as measured from the wing reference plane, may be within the boundary layer and essentially ineffective. Thus, since surface effectiveness and lifting efficiency degrade so significantly as aspect ratio is reduced, a lower limit of 1.0 appears to be reasonable for all practical designs.

An upper limit for aspect ratio is set by both structural and aerodynamic considerations. The larger the aspect ratio, the higher the tip bending moment introduced by the surface for a given area. Also, as the span increases, energy available from the wing vortex diminishes and ground clearance problems may become limiting as well. A reasonable maximum limit for aspect ratio would probably be on the order of 6.0. A practical value of aspect ratio of 3.5 (the DC-8-71 surfaces have AR=3.3) is, thus, midway between the upper and lower limits.

The span limitation for the surfaces, as discussed, is determined from structural, aerodynamic and ground clearance considerations. Using a maximum average chord of the surface of 30 percent of tip chord, a tip chord of 10 percent of the semispan of the wings, and the lower aspect ratio limit of 1.0, the lower span limit would be 3 percent of the semispan of the wings. An upper limit for span of 10 percent is selected somewhat arbitrarily based on studies conducted on the DC-8-61/71. The selected span value is about 7.2 percent for the first embodiment shown, as applied to the DC-8-61/71. Tip bending moment due to the surface increases about linearly with span for surface area held constant until overcome by reduced wing tip vortex energy. A value of about 10 percent of the semispan of the wings based on aerodynamic considerations only appears to be a reasonable limit.

The planform area of each surface is limited by structural and drag, due to wetted surface area, considerations. For the first embodiment, the planform area of each surface is approximately .27 percent of the total planform area of the wings for the DC-8-61/71. However, if the surface had an average chord of 50 percent of the tip chord and a span of 10 percent of the semispan of the wings, its planform area would have been 1.0 percent of the total planform area of the wings and the design would have been not only grossly inefficient by comparison with the design selected, but infeasible, as well, without major wing structural modification.

Therefore, the upper limit for planform area per surface of 1.0 percent of total planform area of the wings provides a broad margin from a normal design range of .2 to .4 percent to encompass very unusual cases, particularly where the wings have substantial unutilized strength capability.

It has been earlier stated that inboard cant angles of 20 degrees will produce significant interference effects at .8 Mach number. It is expected that these effects would continue to be significant at even low Mach numbers with respect to offsetting thrust produced by the invention. Also, with an objective of having sufficient inboard cant to develop a downward component of lift to offset the increased outer wing lift due to "end-plating" by the added surfaces, once this has been achieved further canting degrades the lift characteristics of the aircraft even though it will reduce design wing bending moments for the inboard wing.

Since about 10 degrees appears to be a reasonable target value based on studies of the DC-8-61/71, a 20-degree limit provides a margin for unusual cases in which several surfaces may be employed below the wing, such as the third embodiment later discussed, so that interference effects between the surfaces can be minimized by utilizing differing cant angles as shown in Figure 18.

In general, the objective of the invention is to have negligible change in outer wing lift at any angle of attack while producing net thrust vectors at the wing tips. This objective virtually ensures that there will be no net change in design root bending moment for the wing. However, for cases in which the wing has inherent unutilized strength, it may be desirable to use this strength and in doing so improve lift characteristics of the aircraft by minimizing cant angle. Of course, this may significantly change some of the stability characteristics and handling qualities. Conversely for cases in which it is desired to reduce the design root bending moment for the wing, the cant angle may be increased to the maximum feasible without unacceptably degrading lift characteristics. Again, the effect on stability characteristics and handling qualities must be considered. Therefore, an increase or decrease of even one percent in wing root bending moment has effects which must be evaluated beyond wing strength considerations. An upper limit of about two percent for increase or decrease of wing design root bending moments appear to encompass feasible retrofit programs.

Four additional embodiments of the invention are presented below. The specific detailed designs of each must be determined through the same design procedure used for the first embodiment -- analysis and evaluation of a series of trial configurations. The reasons for considering each of these embodiments are presented below with their descriptions.

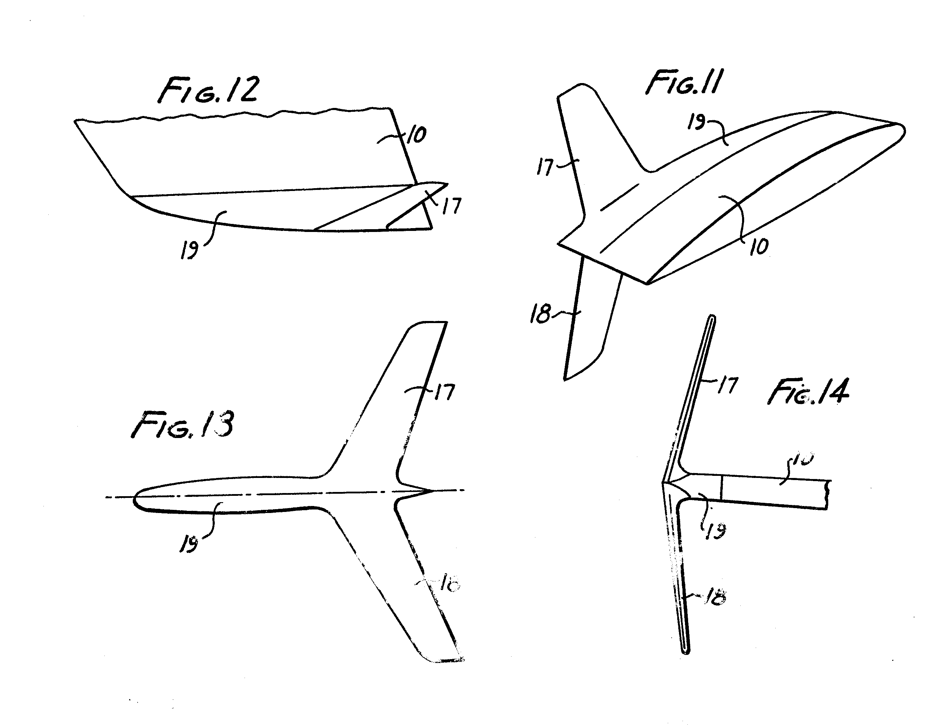

A second embodiment of the invention is shown in Figures 11, 12, 13, and 14. This embodiment represents a wing 10 for which the structural design, from its inception, includes provisions for attachment of the surfaces or for which it is feasible to modify the structural design without major rework to this configuration. This configuration eliminates the aerodynamic body 13 of Figures 1-5 and transition section 11 of the first embodiment and replaces it with a more conventional wing tip configuration 19 which includes a transition section as well as support structure necessary to transfer aerodynamic loads from surfaces 17 and 18 to the primary structure of 10, the outer wing. The upper and lower surfaces 17 and 18, respectively, will be similar to their counterparts in the first embodiment but specifically designed for this particular configuration by the same process used for the first embodiment. As a result, the surfaces 17 and 18 may have different chordwise locations, leading edge sweep angles, spans, taper ratios, subtended angles to the wing reference plane, root incidence angles, camber and twist than found in the first embodiment.

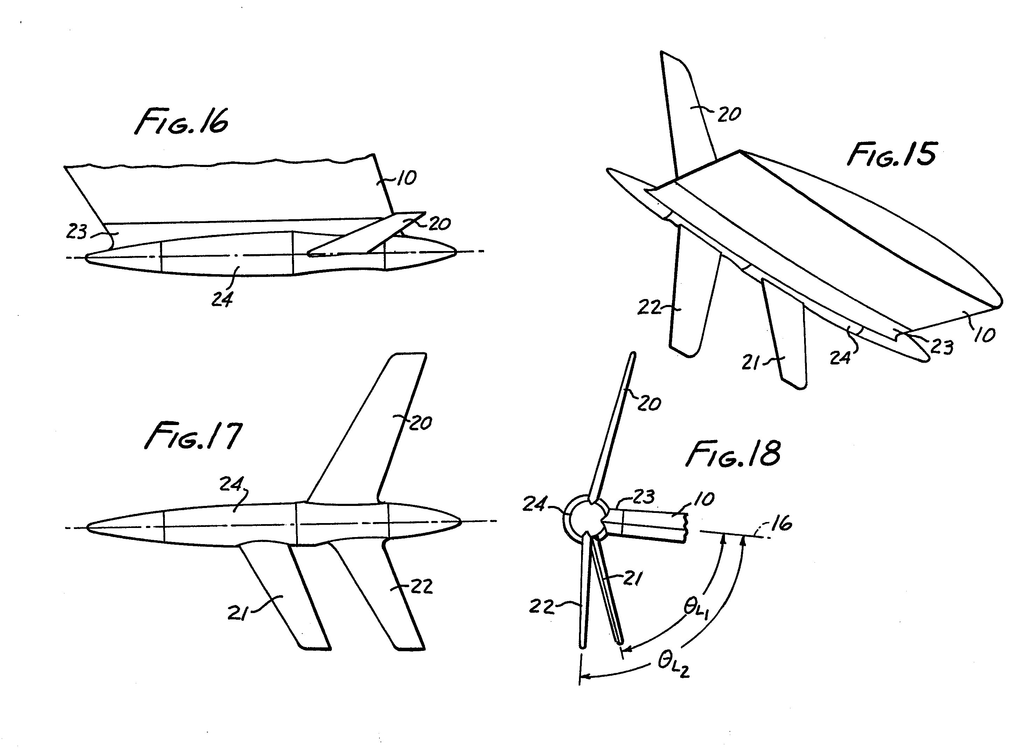

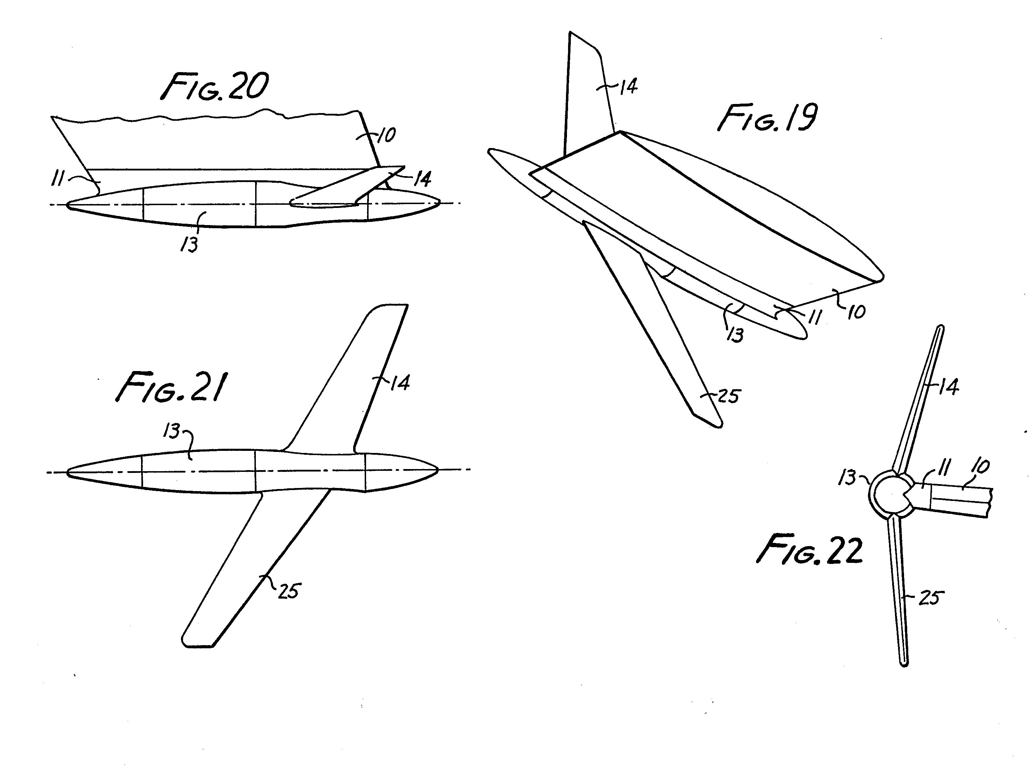

A third embodiment, shown in Figures 15 through 18, is a variation of the first embodiment primarily directed to aircraft which may ground clearance requirements restricting the span of the lower surface so that more than one lower surface is required. The distinguishing feature of the third embodiment is that it employs a plurality of surfaces below the wing reference plane. Therefore, it could be a variation of either the first or second embodiment. As shown in Figure 17, two lower surfaces 21 and 22 are employed which are each about half the area of surface 15 in the first embodiment. They are separated chordwise, as shown in Figure 17, and have different subtended angles with the wing reference plane 16, $\theta_{L1}$ and $\theta_{L2}$, as shown in Figure 18. The torque carrying structure 24, similar to member 13 of the first embodiment, structurally supports the two lower surfaces and is aerodynamically configured so that the placement of the forward lower surface will not result in a significant drag increase. The subtended angles $\theta_{L1}$ and $\theta_{L2}$ of surfaces 21 and 22 are selected to produce the desired components of wing shear for critical wing design loading conditions while minimizing interference effects between each other and with the outer wing 10 and transition section 23. The upper surface 20 is similar to surface 14 of the first embodiment.

Figures 19, 20, 21, and 22 illustrate a fourth embodiment of the invention. Although shown as a variation of the first embodiment, the fourth embodiment can be employed as a variation of either the first or second embodiment since its distinguishing feature is the swept forward planform of the lower surface 25. The forward sweep of the lower surface increases ground clearance for wings in rotation attitude during takeoff and in flare attitude during landing. Proper camber and twist distribution of the lower surface allows the attainment of vortex-induced drag reduction equivalent to that achievable with either the first or second embodiment of the invention where both upper and lower surfaces are sweptback at approximately equal angles.

Another embodiment of the system is feasible based upon an application of well documented aerodynamic theory to this invention. By moving the surfaces 14 and 15 of the first embodiment ahead of the leading edge at the wing tip, the magnitude of the thrust induced by the flow field acting upon them diminishes, as earlier discussed; but, with proper camber and twisting of the surfaces, the total drag reduction may remain essentially the same as for the first embodiment. This is possible due to the fact that the surfaces now modify the flow field acting upon the outboard wing panel. Thus, thrust augmentation now takes place on the outboard wing panel (member 10 and transition section 11) rather than on the surfaces themselves. This drag-reduction mechanism is totally consistent with well established aerodynamic theory as formulated by Professor Max Munk in his well known "stagger theorem".

What is physically taking place is described below. The two surfaces now encounter air flow which is virtually free stream in velocity and direction. Therefore, while remaining cambered convex outboard for the lower surface and convex inboard for the upper surface, the zero lift line may be toed-out significantly for the lower surface and toed-in significantly for the upper surface to ensure large lift forces on the surfaces at cruise. As for the first embodiment, for positive lift conditions on the aircraft, the lift is directed outboard on the lower surface and inboard on the upper surface. Therefore, inboard canting, again, provides a downward force and the resulting torque on the supporting body will cause upbending on the wing. The sidewashes from the two surfaces are directed inboard for the lower one and outboard for the upper one. Thus, a vortex is formed forward of the wing tip of opposite rotation to the wing tip vortex formed for an unmodified wing. This leading vortex formed by the surfaces accomplishes the following: It causes the direction of flow to the outer wing panel to be directed more upward such that greater angles of attack result, hence, more lift is developed similar to the "end-plating: effect inherent to the prior embodiments. Since the direction of the inflow to the outer wing is now more upward than the free stream direction, the lift developed from this redirected outer wing inflow will have a thrust component relative to the free stream direction.

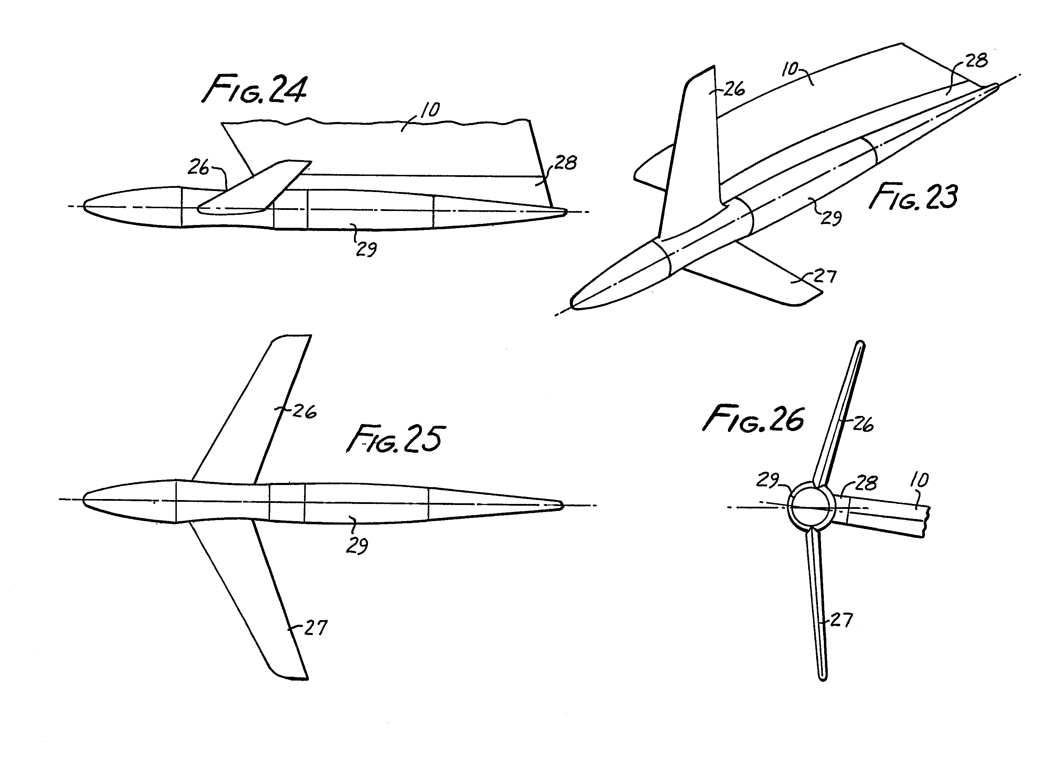

Therefore, a fifth embodiment of the invention is depicted in Figures 23, 24, 25, and 26. The thrust augmentation system is comprises of sweptback upper and lower surfaces 26 and 27 mounted ahead of the wing on an extended aerodynamic body 29 which connects to the outer wing 10 through a new transition section 28. This arrangement makes full use of the concepts established in the above-mentioned Munk's "stagger theorem." Potential benefits of this embodiment over the first embodiment include a more favorable structural mass distribution from the viewpoint of flutter characteristics, reduced interference drag with the wing surface, reduction of outer wing torque, and improved ground clearance for takeoff and landing. However, the outer wing bending moments and the installation weight may be somewhat higher than for the first embodiment. Again, proper camber and twist of the surfaces should provide a drag reduction equivalent to that obtainable with the first embodiment of the invention. To reiterate, the thrust augmentation is generated by modifying the flow field which acts

0094064

upon the outboard wing panel (member 10 and transition section 28) rather than utilizing energy from the flow field induced by the wing. Figure 6 shows the DC-8-71 aircraft with the fifth embodiment of the thrust augmentation system incorporated.

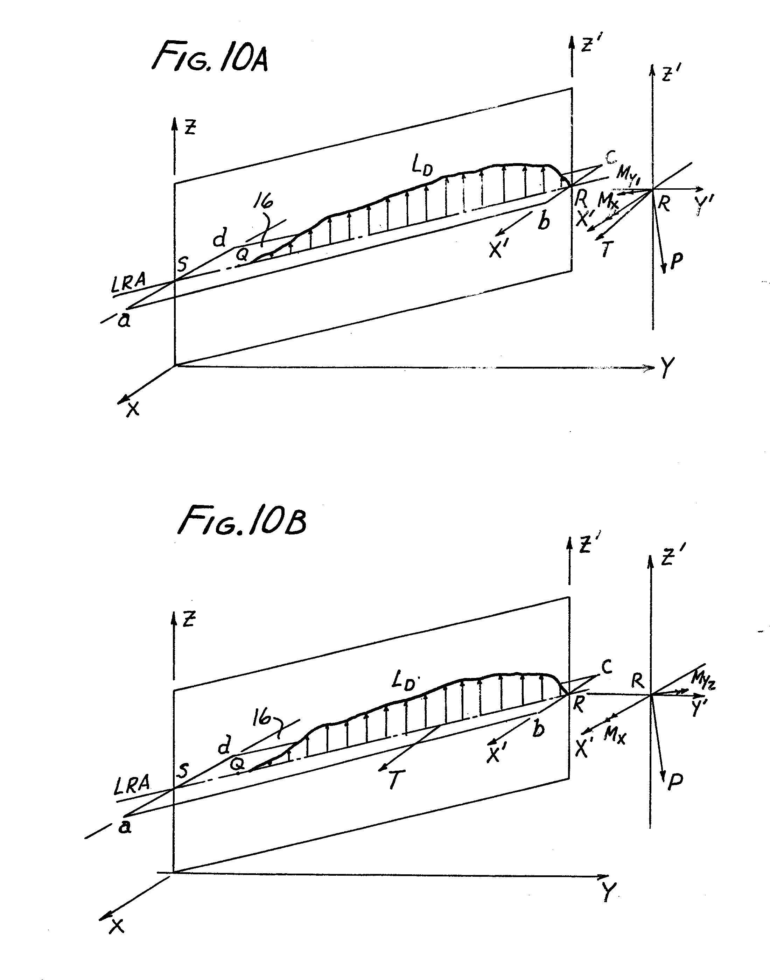

Figure 10B shows a perspective view for the fifth embodiment similar to Figure 10A for the first embodiment. Although both will provide the outer wing free-body diagram shown in Figure 10C, it should be noted that the thrust vector T is moved from point R at the tip in Figure 10A to the approximate location of the resultant additional lift on the wing in Figure 10B. Also, note that the sign of the moment $M_{y2}$ in igure 10B is reversed from $M_{y1}$ in Figure 10A, since P is moved aft to point R from its actual location near the leading edge of the wing at the tip.

Figure 10B illustrates that for the embodiment of Figure 6 the forward location of the downward force P results in counteracting the additional nose-up torque about the LRA due to the incremental lift $L_D$.

## CLAIMS

1. An aircraft thrust augmentation system for use in combination with the wings of an aircraft, comprising:

at least a pair of aerodynamic surfaces each approximately normal to the wing reference planes of the wings of the aircraft and approximately parallel to the longitudinal axis of the aircraft;

said aerodynamic surfaces secured to the wings in the tip regions thereof,

respective ones of said aerodynamic surfaces extending above the surface of said wings;

respective additional ones of said aerodynamic surfaces extending below said wings;

said aerodynamic surfaces canted inboard.

2. The combination in accordance with Claim 1 wherein said aerodynamic surfaces have substantially the same planform in mirror image above and below the wings.

3. The combination in accordance with either of Claims 1 and 2 wherein said aerodynamic surfaces have substantially the same chordwise locations.

4. The combination in accordance with any of Claims 1, 2 and 3 wherein said aerodynamic surfaces exhibit a toed characteristic with at least one aerodynamic surface on each wing toed inward and at least one aerodynamic surface on each wing toed outward.

5. The combination in accordance with any of Claims 1, 2, 3 and 4 wherein said system includes an elongated body secured to each wing in the region of the wingtip and said aerodynamic surfaces are secured to said elongated body and wherein said elongated bodies are of generally circular cross section.

6. The combination in accordance with any of Claims 1 through 5 wherein said aerodynamic surfaces have an aspect ratio of at least 1.0 and wherein said aerodynamic surfaces have spans in the order of 3-10% of the semispan of the wings of the aircraft.

7. The combination in accordance with any of Claims

0094064

1 through 6 wherein said aerodynamic surfaces each have a planform area less than 1.0% of the total planform area of the wings and wherein the inboard cant angles of said aerodynamic surfaces are less than 20 degrees.

8. The combination in accordance with any of Claims 1 through 7 wherein said bodies extend ahead of the leading edges of the wings and said aerodynamic surfaces are secured with the leading edges thereof ahead of the leading edges of the wings at the tips thereof and wherein the trailing edges of said aerodynamic surfaces are ahead of the leading edges of said wings at the tips thereof at their point of attachment.

9. The combination in accordance with any of Claims 1 through 8 wherein said aerodynamic surfaces produce less than 2% change in design wing root bending moment due to their presence and wherein said aerodynamic surfaces provide thrust components tending to reduce the induced drag of the aircraft.

10. The combination in accordance with any of Claims 1 through 9 wherein one of the at least pair of aerodynamic surfaces constitute at least a pair of surfaces and wherein at least two of said aerodynamic surfaces extend from a particular surface of each wing and wherein said aerodynamic surfaces extending from the particular surface of each wing have a shorter span than the aerodynamic surface extending from the other surface of the wing.

11. The combination in accordance with Claim 10 wherein said aerodynamic surfaces extending from the particular surface of each wing are at different cant angles and wherein said aerodynamic surfaces below the wing are secured to said wing at different chordwise locations on said wing and wherein the forward one of said aerodynamic surfaces has a greater cant angle than the aft one.

12. A wing tip device for increasing the thrust of an aircraft by utilizing energy otherwise lost in the vortices formed at its wing tips comprising:

at least a pair of aerodynamic surfaces for each wing, one of said at least pair of surfaces extending above the wing reference plane in the wing tip region of each wing and another

0094064

of said at least pair extending below the wing reference plane in the wing tip region of each wing;

said surfaces being aerodynamically configured cambered surfaces, oriented such that they produce, for positive lift conditions on the aircraft, resultant forces with forward thrust components and downward negative lift components, acting in the region of the wing tips, and increased distributed lifting forces acting over roughly the outer twenty percent of the semispan of each wing terminating at the wing tip with magnitudes such that their total increase in lift is roughly equivalent to the total downward forces acting at the wing tips.

13. The combination in accordance with Claim 12 wherein the lower aerodynamic surfaces are cambered convex outboard and wherein said aerodynamic surfaces have an inboard cant.

14. The combination in accordance with either of Claims 12 and 13 wherein either of said aerodynamic surfaces constitute at least a pair of surfaces and wherein said at least pair of surfaces are located below the wing and wherein said pair of surfaces are located at different chordwise locations and wherein said pair of surfaces have different cant angles.

15. A wing tip device for increasing the thrust of an aircraft by inducing the formation of two vortices ahead of the leading edges of the wings in the tip regions thereof, each vortex rotating counter to the rotation of the vortex formed by its respective unmodified wing in its tip region and comprising:

a pair of aerodynamic surfaces for each wing, one of said pair of surfaces extending above the wing reference plane in the wing tip region of each wing and the second of said pair extending below the wing reference plane in the wing tip region of said wing;

said surfaces being located such that their leading edges intersect the wing reference plane at chordwise locations

0094064

forward of the leading edges of the wings in the tip regions where they are attached to each wing by an aerodynamically shaped body;

said surfaces being aerodynamically configured cambered surfaces and oriented such that they produce, for positive lift conditions on the aircraft, resultant forces with a downward force component at each wing tip and a change in angle of the local flow over the outer wing panel such that there results an increase and redirection of distributed lifting forces over roughly the outer twenty percent of the semispan of each wing terminating at the wing tip, with magnitudes such that their total increase in the lift is roughly equivalent to the total downward forces acting at the wing tips and redirected lift such that thrusting forces are produced in the free stream direction along the affected spans of the outer wings.

16. The combination in accordance with Claim 15 wherein said aerodynamic surfaces have an inboard cant and wherein the inboard cant of said surfaces is no greater than 20 degrees measured from a chordwise plane normal to the wing reference plane.

17. In combination for increasing the thrust of an aircraft having a fuselage,

a pair of wings extending laterally from opposite sides of the fuselage,

an aerodynamic surface means near the outer end of each wing for producing thrust forces along the wing in the direction of movement of the wing while minimizing any increase in the bending movement at the inboard end of the wings and producing increases in the lift along the outer surface of each wing to counterbalance the downward force acting on the wing tip as a result of the inclusion of the aerodynamic surface means near the outer end of each wing.

18. The combination set forth in Claim 17 wherein the aerodynamic surface means are disposed on each wing and are shaped to produce, ahead of the leading edge of each wing in the positions near the tip regions of each wing, vortices rotating counter to the vortex at the positions near the tip regions of each ring without the inclusion of the aerodynamic surface means.

Fig.2

10

11

14

13

Fig.3

$\phi_U$

14

13

15

$\phi_L$

Fig.1

14

13

11

12

10

15

Fig.4

14

A

A

13

11

10

$\theta_U$

16

B

B

15

$\theta_L$

1/4

Fig. 5

Fig. 6

AIRCRAFT
LONG AXIS

6/7

4904064

0094064

**Fig.10c**

$\Delta L_W$

$\Delta V_Q$

$V_T$

$\ell_{CP}$

$\Delta M_Q$

$L_D(n)$

$Q$

16

$n$

$R$ $M_T$

$n_Q \sim 75\%$ SEMISPAN

WING TIP
100% SEMISPAN
X=0

**Fig.7**

$L$

$D$

$\alpha_V$

TOE IN

INBOARD

$\alpha_T$

FORWARD

TOE OUT

TOED OUT

SURFACE
REFERENCE
PLANE

ZERO LIFT
LINE

$\alpha_L$

$V_E$

**Fig.8**

$V_E$

TOED IN

SURFACE
REFERENCE
PLANE

INBOARD

$\alpha_L$

TOE IN

FORWARD

$\alpha_T$

TOE OUT

ZERO LIFT
LINE

$L$

$\alpha_V$

$D$

## Fig. 9

### COMPARISON OF EFFECTS ON WING DESIGN BENDING MOMENTS

TYPICAL WINGLET OR SAILS

WING TIP THRUST AUGMENTATION

PERCENT INCREASE IN DESIGN UPBENDING MOMENT

WING SPANWISE LOCATION (% SEMI-SPAN)

Fig. 10A

Fig. 10B

FIG.12

FIG.11

FIG.13

FIG.14

0094064

FIG.16

FIG.15

23

20

24

10

FIG.17

24

20

21

22

FIG.18

24

23

10

22

21

20

16

$\theta_{L_1}$

$\theta_{L_2}$

22

21

20

10

24

23

4904064

FIG.20

10

11

13

14

FIG.19

14

11

10

13

25

FIG.21

14

13

25

FIG.22

14

13

11

10

25

8/9

4904064

FIG.24

FIG.23

FIG.25

FIG.26

6/6

0094064

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-2 576 981 (VOGT)<br><br>* Column 1, lines 5-11, 43-59; column 2, lines 12-39; column 3, line 33 - column 5, line 23; figures 1-9 * | 1-5,12,13,16,17 | B 64 C 23/06 |
| A,D | US-A-4 190 219 (HACKETT)<br>* Column 2, lines 22-45; column 3, lines 34-45; figures 1-4 * | 1,5-7 | |
| A | US-A-2 846 165 (AXELSON)<br><br>* Column 1, lines 41-44; column 5, lines 31-41; figure 3 * | 1-3,5,10 | |
| A | FR-A-2 355 188 (NATIONAL RESEARCH DEVELOPMENT CORP.)<br>* Page 2, lines 21-38; page 3, lines 16-21; page 4, lines 32-39; figures 1-4,10,13 * | 1,5,7,11 | **TECHNICAL FIELDS SEARCHED (Int. Cl. ³)**<br><br>B 64 C |

The present search report has been drawn up for all claims

| Place of search | Date of completion of the search | Examiner |
|---|---|---|
| THE HAGUE | 05-08-1983 | ZERI A. |